# EUROPEAN PATENT SPECIFICATION

(11) **EP 4 212 638 B1**
(45) Date of publication and mention of the grant of the patent: **17.12.2025**
(21) Application number: 21866762.4
(22) Date of filing: 07.09.2021
(51) Int. Cl.: C22C 19/05, B33Y 10/00, B33Y 70/00, B22F 1/00, B22F 10/28, B22F 10/30, B22F 1/05, C22C 1/04, B22F 10/36, B22F 10/366, B33Y 50/02

(54) **NI-BASED ALLOY POWDER AND ITS USE FOR ADDITIVE MANUFACTURING AN ARTICLE**
NI-BASIERTES LEGIERUNGSPULVER UND SEINE VERWENDUNG FÜR DIE ADDITIVE FERTIGUNG EINES GEGENSTANDS
POUDRE D'ALLIAGE À BASE DE NI ET SON UTILISATION POUR LA FABRICATION ADDITIVE D'UN ARTICLE

(30) Priority: 08.09.2020 JP 2020150803
(43) Date of publication of application: 19.07.2023
(73) Proprietor: Proterial, Ltd., Tokyo 135-0061 (JP)
(72) Inventor: DAIGO, YUZO, Tokyo 108-8224 (JP); SUGAHARA, KATSUO, Tokyo 108-8224 (JP)
(74) Representative: Betten & Resch
(86) International application number: PCT/JP2021/032883
(87) International publication number: WO 2022/054803

(56) References cited:
- WO-A1-2019/185082
- WO-A1-2019/185082
- JP-A- 2001 355 031
- JP-A- 2003 262 491
- JP-A- 2005 500 908
- JP-A- 2015 045 035
- JP-A- 2017 197 834
- JP-A- H0 617 170

## Description

### TECHNICAL FIELD

The present invention relates to a Ni-based alloy powder and its use for manufacturing an additively manufactured article (i.e., lamination molded article) using the Ni-based alloy powder, and, for example, members and parts to be used in an oxidation furnace for semiconductor manufacturing or a firing furnace for electronic components.

### BACKGROUND OF THE INVENTION

Generally, as the members or parts to be installed in the oxidation furnace for semiconductor manufacturing or the firing furnace for electronic components, a Ni-based alloy having excellent high-temperature oxidation resistance is used to prevent mixing of the oxidized scale generated from the members or parts into the product. As a Ni-based alloy having excellent high-temperature oxidation resistance, for example, as shown in Patent Document 1, a Ni-based alloy having excellent high-temperature oxidation resistance and configured to be used as a fin or tube for a high-temperature heat exchanger, which contains, in mass % (hereinafter, "%" refers to "% by mass"), 3.6-4.4% of Al, optionally one or more of 0.1-2.5% of Si, 0.8-4.0% of Cr, 0.1-1.5% of Mn, and the balance Ni with inevitable impurities, is proposed.

In Patent Document 2, a Ni-based alloy having excellent heat resistance and excellent corrosion resistance, which contains 0.05-2.5% of Al, 0.3-2.5% of Si, 0.5-3.0% of Cr, 0.5-1.8% of Mn, Si/Cr < 1.1, and the balance Ni with inevitable impurities and, is proposed.

In Patent Document 3, a Ni-based alloy having excellent high-temperature strength and excellent sparking wear resistance and configured to be used for a sparking plug electrode material, which contains 3.1-4.3% of Al, 0.5-1.5% of Si, 1-2% of Cr, 0.45-0.65% of Mn, 0.005-0.05% of one or two of Mg and Ca, and the balance Ni with inevitable impurities, is proposed.

In Patent Document 4, a Ni-based alloy having excellent hot forgeability and excellent high-temperature oxidation resistance, which contains 2.0-5.0% of Al, 0.1-2.5% of Si, 0.8-4.0% of Cr, 0.1-1.5% of Mn, 0.001-0.01% of B, 0.001-0.1% of Zr, and the balance Ni with inevitable impurities, is proposed.

In Patent Document 5, a Ni-based alloy having excellent hot forgeability and high-temperature oxidation resistance, which contains 2.0-5.0% of Al, 0.1-2.5% of Si, 0.1-1.5% of Mn, 0.001-0.01% of B, 0.001-0.1% of Zr, and the balance Ni with inevitable impurities, is proposed.
WO 2019/185082 A1 (Patent Document 6) discloses the use of a nickel-chromium-aluminum alloy as a powder for additive manufacturing, wherein the powder consists of spherical particles ranging in size from 5 to 250 pm, and wherein said alloy consists of, in weight percent, 24 to 33% chromium, 1.8 to 4.0% aluminum, 0.10 to 7.0% iron, 0.001 to 0.50% silicon, 0.005 to 2.0% manganese, 0.00 to 0.60% titanium, 0.0 to 0.05% each of magnesium and/or calcium, 0.005 to 0.12% carbon, 0.001 to 0.050% nitrogen, 0. 0000 - 0.100 % oxygen, 0.001 to 0.030% phosphorus, a maximum of 0.010% sulfur, a maximum of 2.0 % molybdenum, a maximum of 2.0 % tungsten, the remainder being nickel and the usual process-related impurities, with the powder having total inclusions of 0.0 - 4% pore area with a pore size of > 1 pm.

### Prior Art Documents

### Patent Literatures

Patent Document 1: JP 2003-262491 A
Patent Document 2: JP H2-163336A
Patent Document 3: JP H06-017170A
Patent Document 4: JP 2014-080675A
Patent Document 5: JP 2015-045035A
Patent Document 6: WO 2019/185082 A1

### SUMMARY OF THE INVENTION

### PROBLEMS TO BE SOLVED BY THE INVENTION

In recent years, in applications such as members and parts for manufacturing semiconductor products and electronic components, excellent high-temperature oxidation resistance and a complex shape such as a gas flow path are required. It becomes difficult to implement such a complex shape by machining plates, rods, and forged articles, and it is known that additive manufacturing methods using alloy powders are suitable as a means of forming an article with a complex shape. However, Ni alloys with a high Al content as in the aforementioned Patent Documents 1 to 5 have very high weld crack sensitivity. The additive manufacturing methods are similar to microlevel welding because they are exhibiting the melting form of repeating the melting and solidification of individual powders. Therefore, even in the additive manufacturing methods, it is easily inferred that the additive manufacturing properties of the aforementioned Ni-based alloys are poor, resulting in such as cracking and defects. Therefore, even when the Ni-based alloys shown in the aforementioned Patent Documents 1 to 5 are diverted to a powder for additive manufacturing as it is, they cannot be said to have sufficient additive manufacturing properties or high-temperature oxidation resistance, and could not be used as a Ni-based alloy powder for applications requiring additive manufacturing properties and high-temperature oxidation resistance.

Accordingly, it is an object of the present invention to provide a Ni-based alloy powder that is capable of suppressing the occurrence of cracks and defects in an additively manufactured article and has excellent high-temperature oxidation resistance, and a method for manufacturing an additively manufactured article using the Ni-based alloy powder.

### MEANS FOR SOLVING THE PROBLEM

The present invention is defined in independent claim 1. The dependent claims define embodiments of the invention.

### EFFECT OF THE INVENTION

According to the present invention, it is possible to provide a Ni-based alloy powder that is capable of suppressing the occurrence of cracks and defects in an additively manufactured article and has excellent high-temperature oxidation resistance, and its use for manufacturing an additively manufactured article using using powder bed fusion or directed energy deposition.

### BRIEF DESCRIPTION OF DRAWINGS

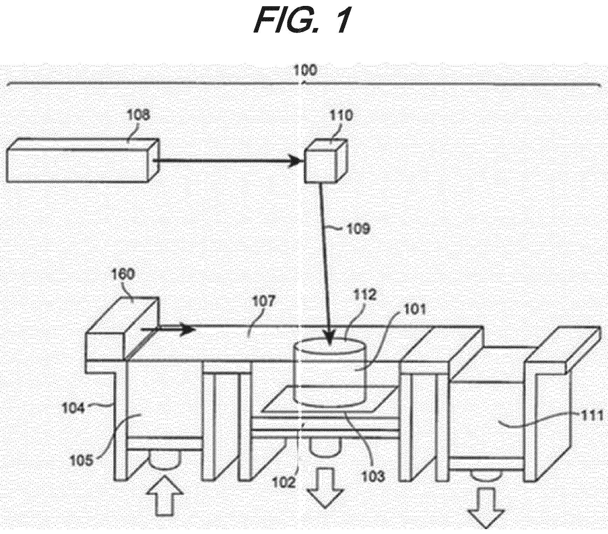

FIG. 1 is a schematic view showing an exemplary configuration of an additive manufacturing apparatus of a selective laser melting method and an example of an additive manufacturing method.

### DETAILED DESCRIPTION OF THE INVENTION

Next, a Ni-based alloy powder of the present invention will be described in detail for the numerical limitations of each component element in the alloy composition. Thereafter, a method of manufacturing the alloy powder and an additive manufacturing method will be described.

The present invention can be said to be a Ni-based alloy powder suitable for additive manufacturing and has excellent additive manufacturing properties. There has been no conventional Ni-based alloy powder for additive manufacturing like the present invention. For example, when Al and Cr are selected in Patent Document 1, it is possible to obtain a Ni-based alloy powder having a composition comprising, in mass %, 3.5-4.5% of Al, 0.8-4.0% of Cr, and the balance Ni with inevitable impurities, but it is not possible to obtain additive manufacturing properties. Meanwhile, the Ni-based alloy powder of the present invention exhibits additive manufacturing properties by intentionally including 0.0100% or less of C, 0.001-0.050% of O, and 0.0001-0.0150% of N.
The Ni-based alloy powder of the present invention exhibits high-temperature oxidation resistance equivalent to that of the Ni-based alloy described in the aforementioned Patent Document 1 and further has excellent additive manufacturing properties.

### Al: 3.5-4.5%

Al is added because it has the effect of forming an alumina film (i.e., alumina coating) on a surface of an additively manufactured article composed of a Ni-based alloy, thereby improving high-temperature oxidation resistance and reducing the occurrence of oxidized scale. When the content of Al is 3.5% or more, a sufficient alumina film is formed. When the content of Al is 4.5% or less, cracking is less likely to occur during additive manufacturing in which the process of melting and solidifying the individual Ni-based alloy powder is repeated. Therefore, the content of Al is determined to be 3.5-4.5%. The upper limit of Al is preferably 4.4%, more preferably 4.2%. Meanwhile, the lower limit of Al is preferably 3.6%, more preferably 3.7%.

The upper limit value and the lower limit value of the Al content can be optionally combined. Also, in the elements described below, the upper limit value and the lower limit value may optionally be combined.

### Cr: 0.8-4.0%

Cr is added because it has the effect of stabilizing the alumina film, thereby improving the high-temperature oxidation resistance. When the content of Cr is 0.8% or more, the effect of improving the above action is obtained. When the content of Cr is 4.0% or less, the formation of alumina film is less likely to be inhibited, so that the reduction in high-temperature oxidation resistance can be suppressed. Therefore, the content of Cr is determined to 0.8 to 4.0%. The upper limit of Cr is preferably 3.0%, more preferably 2.3%. Also, the lower limit of Cr is preferably 1.0%, more preferably 1.6%.

### C: 0.0100% or less

C is effective in preventing shrinkage cavity formation in the solidification process. The process in which the individual Ni-based alloy powder is melted and solidified is repeated at the time of shaping the additively manufactured article. If shrinkage cavities occur in the solidification process, the defects will be a source of fine powder dust. Therefore, it is not preferable for the additively manufactured article to be used, in particular, as members or parts of a semiconductor manufacturing apparatus for which the particles are undesirable. Therefore, by setting the content of C to 0.0100% or less, the generation of carbide can be suppressed, and the formation of alumina film on the additively manufactured article can be hardly inhibited. The upper limit of C is preferably 0.0080%, more preferably 0.0050%. Also, the lower limit of C is preferably 0.0005%, more preferably 0.0008%, and even more preferably 0.0010%.

### O: 0.001-0.050%

O has the effect that, in a high-temperature state immediately after solidification in a molten metal blowing step during powder production, O is instantaneously bound mainly to Al, then forms a very thin and strong oxide film on the powder surface, thereby suppressing further oxidation progress. This minimizes the amount of oxide of powder origin that would otherwise be incorporated into the additively manufactured article as a foreign object. When the content of O is 0.001% or more, this effect is exhibited. However, when the content of O is more than 0.050%, the oxide on the powder surface will reveal defects in the additively manufactured article. Therefore, the content of O is set to 0.001-0.050%. The upper limit of O is preferably 0.020%, more preferably 0.010%. Also, the lower limit of O is preferably 0.002%, more preferably 0.005%.

### N: 0.0001-0.0150%

N has the effect of suppressing microsegregation. During additive manufacturing, the individual powders are instantaneously molten by the laser, followed by solidification by quenching, and the melt-solidification is repeated to provide an additively manufactured article. Microsegregation may occur in this process. Due to microsegregation, the alumina film to be formed on the additively manufactured article becomes intermittent. This causes the degradation in high-temperature oxidation resistance as a whole. When the content of N is 0.0001% or more, an effect of inhibiting micro-segregation is exhibited. Meanwhile, when the content of N is more than 0.0150%, the formation of needle-like nitride AlN reveals the degradation in the high-temperature oxidation resistance of the additively manufactured article, so it is not preferable. Therefore, the content of N is set to 0.0001-0.0150%. The preferred upper limit of N is 0.0100%, more preferably 0.0080%. Preferably, the lower limit of N is 0.0005%, more preferably 0.0010%.

Note that the contents of C, O, and N can be adjusted by, for example, melting these elements in a vacuum and controlling the atmosphere with argon gas atomization.

### Si: 1.80% or less.

Si may be added as necessary because it has the effect of improving the high-temperature oxidation resistance by stabilizing the alumina film formed on the additively manufactured article as well as Cr. When Si is added, the content of Si can be more than 0%, so that the above action can be exerted.

In addition, the content of Si is preferably 0.05% or more in order to effectively exert its effect. On the other hand, when the content of Si is more than 1.80%, it is not preferable for the shrinkage cavities to easily occur during solidification in the additive manufacturing process in which the process of melting and solidifying the individual Ni-based alloy powder is repeated. Therefore, the content of Si is determined to be 1.80% or less. The upper limit of Si is preferably 1.60%, more preferably 1.50%. The lower limit of Si is preferably 0.05%, more preferably 0.10%, and even more preferably 0.5%.

### Mn: 1.5% or less.

When the solidification crack occurs easier due to the inclusion of Al, it is possible to suppress solidification cracking by adding Mn. For example, increasing the lamination speed increases heat input and increases the frequency of occurrence of solidification cracking. If the lamination speed is desired to be increased, Mn can be added as necessary. When Mn is added, the content of Mn can be more than 0%, so that the above action can be exerted. Further, in order to effectively exhibit the effect, it is preferable that the content of Mn be 0.1% or more. On the other hand, when the content of Mn is more than 1.5%, the high-temperature oxidation resistance decreases. Therefore, the content of Mn is determined to be 1.5% or less. The upper limit of Mn is 1.0%, more preferably 0.8%. Also, the lower limit of Mn is preferably 0.1%, more preferably 0.2%.

### Mg: 0.050% or less.

Mg may be added as necessary because it has the effect of stabilizing the alumina film formed on the additively manufactured article by immobilizing the S contained as inevitable impurities, thereby improving the high-temperature oxidation resistance. When Mg is added, the content of Mg can be more than 0%, so that the above action can be exerted. Further, in order to effectively exhibit the above effect, it is preferable that the Mg content be 0.001% or more. On the other hand, when the content of Mg is more than 0.050%, microsegregation will be promoted during melt-solidification in the additive manufacturing process. Thereby, the stability of the alumina film formed on the additively manufactured article will be impaired and the high-temperature oxidation resistance will deteriorate. Therefore, the content of Mg was set to be 0.050% or less. The upper limit of Mg is preferably 0.040%, more preferably 0.030%. Also, the lower limit of Mg is preferably 0.001 %, more preferably 0.002%.

### The balance Ni and inevitable impurities

The composition of this Ni-based alloy powder can be determined by the following measurement techniques. As also described in the Examples below, the powder for use of additive manufacturing after classification was dissolved in a suitable aqueous solution and the aqueous solution was subjected to high-frequency inductively coupled plasma (ICP) analysis to determine the content of the predetermined component. For C, N, and O, gas analysis by a combustion method can be performed to determine the content thereof.

For trace amounts of inevitable impurities, for example, the total thereof may be 1.0% or less, and each amount of the inevitable impurities may be 0.5% or less, more preferably 0.1% or less. More specifically, each of S and P is preferably 0.01% or less, and each of Zr, Ti, Cu, Nb, and Fe is preferably 0.5% or less.

### Method for Producing Alloy Powder

For example, an atomization method can be used as the method for producing the Ni-based alloy powder (i.e., alloy powder).

The atomization method is performed by scattering the molten metal as droplets by the kinetic energy of the high-pressure spray medium and solidifying it to produce the powder. Depending on the type of spray medium to be applied, the atomization methods are classified into water atomization, gas atomization, jet atomization, and the like. Although any atomization method can be employed, the gas atomization uses high-pressure gas as the spray medium, for example, an inert gas such as nitrogen, argon, or air. The powder produced by the gas atomization is easier to spheroidize due to surface tension until the molten particles as the droplets are solidified because the cooling rate by the gas is smaller than that of water. This alloy powder is preferred because it has strength for use in additive manufacturing.

Further, granulated sintered particles may also be alloyed to produce the alloy powder.
This manufacturing method includes a raw material preparation step, a raw material mixing step, a granulation step, a sintering step, and an alloying step, wherein the raw material powder is granulated using a spray dryer, and then sintered to obtain an alloy powder composed of granulated sintered particles.

In the raw material preparation step, for example, Al powder, Cr powder, Ni powder, and if necessary, Si powder, Mn powder, and Mg powder are prepared according to the composition of the desired alloy powder. The raw material is not limited to a single metal powder but may be an alloy powder such as, for example, NiAl alloy powder. The particle size of the raw material powder may be appropriately selected according to the particle size of the alloy powder to be obtained.

Next, in the raw material mixing step, the raw material powder prepared in the raw material preparation step is mixed in a wet manner with a wax such as paraffin. The mixing can be performed using known equipment, such as an attritor. The raw material powder, wax, together with e.g., ethanol, as a dispersion medium can be put into the attritor and wet-mixed, to obtain a slurry of mixed powder.

Next, in the granulation step, the slurry obtained in the raw material mixing step is sprayed and dried by a spray dryer to granulate the powder of the mixture.

Next, in the sintering step, the powder of the mixture granulated in the granulation step is charged into a drying furnace, degreased, and sintered. The degreasing temperature is the temperature at which the wax used can be removed, and the sintering temperature may be the temperature for solidifying the powder particles of the mixture.

As the alloying step, the granulated powder that has undergone the sintering step can be alloyed using, for example, thermal plasma-droplet refining (PDR) by passing through a high-temperature region, such as a plasma.

In the alloying step using PDR, the granulated powder is instantaneously melted and solidified. This allows the resulting alloy powder to be shaped by the surface tension so that each particle is close to the true sphere and the particle surface is smooth. This alloy powder also has strength for use in additive manufacturing.

### Particle Size of Ni-Based Alloy Powder: 1-100 µm

The additive manufacturing technique is a shaping method for imparting a shape by repeating the melt-solidification of individual powders, and the volume required for the melt-solidification each time is less likely to be obtained when the particle size of the Ni-based alloy powder is less than 1 µm so that a sound additively manufactured article is unlikely to be obtained. That is, the powder yield is improved by reducing the powder having a particle diameter of less than 1 µm, thereby contributing to the reduction of the defects rate. On the other hand, when the particle size of the Ni-based alloy powder is more than 100 µm, the volume required for the melt-solidification each time is too large to obtain a sound additively manufactured article. That is, the power shortage of the laser is suppressed by reducing the powder having a particle diameter of more than 100 µm, thereby contributing to the reduction of the defects rate. Therefore, the particle size range (particle size distribution) of the Ni-based alloy powder is preferably 1-100 µm, more preferably 20-80 µm. Note that it is preferred to use the powder obtained by the gas atomization method by which a spherical shape can be obtained. Also, for the particle size of the powder, the particle size distribution (e.g., values of D0 and D100) can be measured using a laser diffraction particle size distribution measurement device.

### Additive Manufacturing Method

A shaped article with a desired shape can be additively manufactured by supplying the Ni-based alloy powder of the present invention to an additive manufacturing apparatus, e.g., a powder bed fusion type additive manufacturing apparatus, and selectively melting and bonding, i.e., fusing the alloy powder by irradiating a region on which the powder is laid with high energy such as a laser beam and an electron beam. Although the additive manufacturing apparatus can be classified into the Powder Bed Fusion (PBF) type and the Directed Energy Deposition (DED) type depending on the shape or the like of the additive manufacturing apparatus, the additively manufactured article of the present embodiment can be shaped in any system and the type of additive manufacturing apparatus and the like are not particularly limited.

The powder bed fusion method (powder bed method) comprises spreading a metal powder to prepare a powder bed, carrying out the melt-solidification (i.e., melting and solidifying) to a portion to be shaped with a laser beam or an electron beam which serves as a heat source. The powder bed method is classified into the laser beam heat source method and the electron beam heat source method to be described below.
The laser beam heat source method comprises irradiating the spread metal powder material with a laser beam to melt and solidify only the portion to be shaped of the powder bed to additively manufacture the article, and the Selective Laser Melting (SLM) method is known. The Selective Laser Sintering (SLS) method is also known as a method of sintering without having to melt the portion to be shaped of the powder bed. In the laser beam heat source method, melt-solidification is carried out in an inert atmosphere, such as nitrogen.
The electron beam heat source method converts kinetic energy to heat and melts the metal powder by irradiating the metal powder in the spread powder bed with an electron beam in a high vacuum and causing it to collide with each other. In the electron beam method, melt-solidification is carried out in a vacuum. The electron beam heat source method is referred to as the Selective Electron Beam Melting (SEBM) method or simply referred to Electron Beam Melting (EBM) method.

The Direct Energy Deposition (DED) method is also referred to as Laser Metal Deposition (LMD) method, and comprises continuously injecting a metal powder to a forward position in a direction in which a laser beam or electron beam is moved, and irradiating the metal powder supplied to a molten region with the laser beam or electron beam to melt and solidify the metal powder to shape the article.
While the powder bed methods have the advantage of high shape accuracy of the additively manufactured articles, the metal deposition methods have the advantage of being capable of high-speed shaping.

Of the powder bed methods, the SLM method is a method comprising selectively melting and solidifying a metal powder using a fine laser beam on a powder bed having a laminated thickness of several tens of micrometers (µm), and laminating solidified layers to shape the article. The SLM method has the feature that precision components can be fabricated as compared to other additive manufacturing methods. For example, the shaping can be performed under the conditions selected from a laser power of 400 W or less, a scanning speed of 7000 mm/s or less, a scanning pitch of 0.05-0.15 mm, and a layer thickness of 0.03-0.1 mm, and the energy density which is appropriately set.

Hereinafter, an additive manufacturing process by the SLM method will be described. FIG. 1 is a schematic diagram showing a configuration of a powder additive manufacturing apparatus 100 of the SLM method. A stage 102 is lowered at a single layer thickness (e.g., about 20-50 µm) of a shaping object (i.e., molded member) 101 to be additively manufactured. An alloy powder 105 is supplied from a powder supply container 104 to a base plate 103 on a top surface of the stage 102, and the alloy powder 105 is planarized by a recoater 160 to form a powder bed 107 (i.e., powder layer).

Next, based on a 2D slice data converted from a 3D-CAD data of the shaping object 101 to be shaped, a laser beam 109 output from a laser oscillator 108 is applied to an unmelted powder bed spread over a base plate 103 through a galvanometer mirror 110 to form a fine molten pool. In the meantime, the molten pool is successively melted and solidified while being moved to form a 2D slice-shaped solidified layer 112. The unmelted powder is recovered and put into a recovery container 111. The stage 102 is then lowered and a new metal powder is supplied onto the solidified layer 112 to form a new powder bed 107. The new powder bed 107 is irradiated with the laser beam 109 to be melted and solidified to form a new solidified layer. Thereafter, the shaping object 101 is manufactured by repeating this operation.

Here, since the shaping object 101 is manufactured integrally with the base plate 103 and is covered by the unmelted powder, at the time of removal, the irradiation of laser beam is terminated, and the powder and the shaping object 101 are sufficiently cooled to recover the unmelted powder, then the shaping object 101 and the base plate 103 are removed from the powder additive manufacturing apparatus 100. The shaping object 101 may then be cut from the base plate 103 to obtain the shaping object 101.

Through the above additive manufacturing process, an additively manufactured article including 3.5-4.5% of Al, 0.8-4.0% of Cr, 0.0100% or less of C, 0.001-0.050% of O, 0.0001-0.0150% of N, and the balance Ni with inevitable impurities, in which a defects rate of 1.2% or less and a total reflectance of 20% or more is obtained. Such an additively manufactured article is suitable for, e.g., members and parts to be used in an oxidation furnace for semiconductor manufacturing or a firing furnace for electronic components.

### EXAMPLES

Examples of the present invention will be described below.
High-purity melting raw materials were prepared and melted using a conventional high-frequency vacuum melting furnace to produce about 10 kg of mother alloys, respectively, and the gas atomization method was used in an argon atmosphere to produce Ni-based alloy powders having the component compositions shown in Table 1, respectively. In a similar manner, elemental powders (i.e., raw powders) for obtaining Ni-based alloy powders having component compositions corresponding to comparative examples shown in Table 2, respectively, were prepared.

The resulting gas-atomized elemental powders were classified into powders each having a particle size of 20-80 µm for additive manufacturing and other powders, using a plurality of sieves (mesh size 200, mesh size 600, and the like). With these classified powders each having a particle size of 20-80 µm, Ni alloy powders 1 to 22 of the present invention (hereinafter referred to as the "inventive alloy powders") and Ni alloy powders 1 to 8 in comparative examples (hereinafter referred to as "comparative alloy powders") were obtained.

Next, by means of a powder bed fusion type additive manufacturing device (EOS M290 manufactured by EOS GmbH), five sheets of plate material (30 × 30 × 5 mm) as additively manufactured articles were manufactured using the inventive alloy powders 1 to 22 and the comparative alloy powders 1 to 8, for each powder. The laser output during additive manufacturing was set to 300 W on the basis of the prior studies, and the scanning speed was 1000 mm/seconds and the scanning pitch was 0.11 mm. The lamination thickness for each layer was set to about 0.04 mm.

The following evaluations were made for additively manufactured articles shaped using the inventive alloy powders as well as the comparative alloy powders.

### < Presence of Fine Cracks >

The presence or absence of cracks was visually confirmed for every five sheets of plate material as the fabricated additively manufactured article. When even one fine crack could be confirmed, the result was evaluated as "Yes" and the following tests were not carried out. Table 1 shows the results of the inventive alloy powders 1 to 22 and Table 2 shows the results of comparative alloy powders 1 to 8.

### <Measurement of Defects Rate (area %) >

The cross-section of the plate material as the additively manufactured article was sliced, embedded in a resin, polished to # 1500 with a water-resistant emery paper, and further polished with a diamond paste having a particle diameter of 1 µm to form a mirror-finished surface. The mirror-finished surface was observed with an optical microscope, and defects (voids, nests) in the range of 1 mm × 1 mm were identified by image analysis, and the area ratio was determined as the defects rate (area %). Note that the resolution was 1024 × 1280 pixels and a black portion of 8 pixels or more after a binarization process was judged as a defect using the image analysis software. Table 1 and Table 2 show the values of defects rates (area %). When the defects rate is 1.2% or less, the result is evaluated as good.

### < Measurement of total reflectance (%) >

The surface of the plate as an additively manufactured article was polished, finally finished with a water resistant emery paper # 400, and held for 5 minutes in an acetone ultrasonic vibration state and degreased. The electric furnace was then used to perform an exposure test at 700°C × 10 hours in the atmosphere, and the total reflectance was measured by reflectance spectroscopic film thickness measurements of the plate material after testing. When the surface is covered with an oxidized scale without any gloss, the total reflectance approaches zero. When no oxidized scale is generated and the gloss of the surface even with discoloration is maintained, the total reflectance is 20% or more and the high-temperature oxidation resistance is excellent. Table 1 shows the results of the measurement of the inventive alloy powders 1 to 22 and Table 2 shows the results of the measurement of the comparative alloy powders 1 to 8. The optical reflection characteristics were measured under the condition that the wavelength d is 360-740 nm and the measurement range is φ 8 mm, using a spectral colorimeter CM 2500 manufactured by Konica Minolta, Inc., as the measurement device.

As also evident from the results shown in Table 1 and Table 2, the additively manufactured articles made using the inventive alloy powders 1 to 22 have the results that "No" for the fine cracks in all examples and the defects rates are 1.2% or less in all examples. That is, it was confirmed that they were excellent in additive manufacturing. Further, the total reflectance was maintained at 20% or more so high-temperature oxidation resistance was also excellent in all examples. It was confirmed that the additively manufactured articles according to the present invention were superior to the additively manufactured articles made using the comparative alloy powders 1 to 8.

**Table 1**

| | Chemical composition, mass% | | | | | | | | | Presence of fine cracks | Defects rate % | Total reflectance, % |
|---|---|---|---|---|---|---|---|---|---|---|---|---|
| | Al | Cr | C | O | N | Si | Mn | Mg | Ni+ Inevitable impurities | | | |
| 1 | 4.0 | 1.9 | 0.0011 | 0.008 | 0.0012 | - | - | - | Balance | No | 0.6 | 22 |
| 2 | 3.5 | 2.0 | 0.0008 | 0.002 | 0.0022 | - | - | - | Balance | No | 0.7 | 20 |
| 3 | 4.5 | 1.0 | 0.0018 | 0.010 | 0.0005 | - | - | - | Balance | No | 0.6 | 23 |
| 4 | 3.8 | 0.8 | 0.0019 | 0.005 | 0.0010 | - | - | - | Balance | No | 0.8 | 22 |
| 5 | 4.1 | 4.0 | 0.0021 | 0.007 | 0.0079 | - | - | - | Balance | No | 0.7 | 22 |
| 6 | 4.2 | 1.6 | 0.0005 | 0.008 | 0.0045 | - | - | - | Balance | No | 0.5 | 23 |
| 7 | 3.9 | 2.3 | 0.0099 | 0.019 | 0.0025 | - | - | - | Balance | No | 0.7 | 22 |
| 8 | 4.0 | 1.8 | 0.0049 | 0.001 | 0.0014 | - | - | - | Balance | No | 0.6 | 23 |
| 9 | 3.9 | 2.1 | 0.0022 | 0.050 | 0.0034 | - | - | - | Balance | No | 0.6 | 22 |
| 10 | 3.9 | 2.2 | 0.0014 | 0.006 | 0.0001 | - | - | - | Balance | No | 0.7 | 23 |
| 11 | 4.1 | 1.9 | 0.0012 | 0.008 | 0.0149 | - | - | - | Balance | No | 0.6 | 23 |
| 12 | 4.1 | 2.0 | 0.0015 | 0.007 | 0.0099 | 0.05 | - | - | Balance | No | 0.7 | 25 |
| 13 | 4.0 | 1.7 | 0.0077 | 0.008 | 0.0029 | 1.79 | - | - | Balance | No | 0.6 | 26 |
| 14 | 3.6 | 3.0 | 0.0009 | 0.009 | 0.0033 | - | 0.1 | - | Balance | No | 0.6 | 21 |
| 15 | 4.4 | 1.9 | 0.0017 | 0.009 | 0.0029 | - | 1.5 | - | Balance | No | 0.7 | 22 |
| 16 | 3.7 | 1.8 | 0.0019 | 0.007 | 0.0061 | - | - | 0.001 | Balance | No | 0.6 | 23 |
| 17 | 4.2 | 1.9 | 0.0024 | 0.009 | 0.0012 | - | - | 0.050 | Balance | No | 0.8 | 24 |
| 18 | 4.1 | 1.9 | 0.0015 | 0.011 | 0.0019 | 1.4 | 0.5 | - | Balance | No | 0.6 | 23 |
| 19 | 4.0 | 2.1 | 0.0017 | 0.009 | 0.0041 | - | 0.4 | 0.007 | Balance | No | 0.7 | 22 |
| 20 | 3.9 | 2.1 | 0.0016 | 0.008 | 0.0011 | 1.6 | 0.5 | 0.005 | Balance | No | 0.4 | 23 |
| 21 | 3.9 | 1.8 | - | 0.010 | 0.0019 | - | - | - | Balance | No | 1.1 | 23 |
| 22 | 4.0 | 2.1 | 0.0018 | 0.032 | 0.0015 | - | - | - | Balance | No | 1.2 | 23 |

**Table 2**

| | Chemical composition, mass% | | | | | | | | | Presence of fine cracks | Defects rate, % | Total reflectance, % |
|---|---|---|---|---|---|---|---|---|---|---|---|---|
| | Al | Cr | C | O | N | Si | Mn | Mg | Ni+ Inevitable impurities | | | |
| 1 | 3.4* | 2.0 | 0.0010 | 0.009 | 0.0015 | - | - | - | Balance | No | 0.7 | 17 |
| 2 | 4.6* | 1.9 | 0.0015 | 0.008 | 0.0028 | - | - | - | Balance | Yes | - | - |
| 3 | 4.0 | 0.7* | 0.0017 | 0.008 | 0.0032 | - | - | - | Balance | No | 0.7 | 19 |
| 4 | 3.9 | 4.1* | 0.0018 | 0.007 | 0.0026 | - | - | - | Balance | No | 0.6 | 18 |
| 5 | 4.1 | 1.9 | 0.0105* | 0.009 | 0.0027 | - | - | - | Balance | No | 0.6 | 18 |
| 6 | 3.9 | 1.9 | 0.0014 | -* | 0.0021 | - | - | - | Balance | No | 1.3 | 22 |
| 7 | 4.0 | 2.0 | 0.0016 | 0.007 | -* | - | - | - | Balance | No | 0.7 | 19 |
| 8 | 4.0 | 1.9 | 0.0017 | 0.008 | 0.0155* | - | - | - | Balance | No | 0.6 | 16 |

| | | | | | | | | | | | | |
|---|---|---|---|---|---|---|---|---|---|---|---|---|
| "*" means that the value is out of the scope of the invention. | | | | | | | | | | | | |

## Claims

1. A Ni-based alloy powder, comprising:
in mass%,
3.5-4.5% of Al,
0.8-4.0% of Cr,
0.0100% or less of C,
0.001-0.050% of O,
0.0001-0.0150% of N,
said Ni-based alloy powder further optionally comprising:
1.80% or less of Si,
said Ni-based alloy powder further optionally comprising:
1.5% or less of Mn,
said Ni-based alloy powder further optionally comprising:
0.050% or less of Mg, and
the balance Ni with inevitable impurities.

2. The Ni-based alloy powder according to claim 1, wherein a powder particle size of the Ni-based alloy powder is in a range of 1-100 µm when measured according to the method described in the description.

3. Use of the Ni-based alloy powder according to any one of claims 1 to 2 to manufacture an additively manufactured article using powder bed fusion or directed energy deposition.

4. The use of the Ni-based alloy powder according to claim 3, wherein the additively manufactured article comprises a defects rate of 1.2% or less and a total reflectance of 20% or more when measured according to the method described in the description.

## Patentansprüche

1. Ni-Basislegierungspulver, umfassend:
in Masse-%:
3,5-4,5 % Al,
0,8-4,0 % Cr,
0,0100 % oder weniger C,
0,001-0,050 % O,
0,0001-0,0150 % N,
wobei das Ni-Basislegierungspulver ferner optional umfasst:
1,80 % oder weniger Si,
wobei das Ni-Basislegierungspulver ferner optional umfasst:
1,5 % oder weniger Mn,
wobei das Ni-Basislegierungspulver ferner optional umfasst:
0,050 % oder weniger Mg, und
Rest Ni mit unvermeidbaren Verunreinigungen.

2. Ni-Basislegierungspulver nach Anspruch 1, wobei eine Pulverpartikelgröße des Ni-Basislegierungspulvers in einem Bereich von 1-100 µm liegt, gemessen nach dem in der Beschreibung beschriebenen Verfahren.

3. Verwendung des Ni-Basislegierungspulvers nach einem der Ansprüche 1 bis 2 zur Herstellung eines additiv gefertigten Gegenstands mittels Pulverbettfusion (powder bed fusion) oder gerichteter Energieabscheidung (directed energy deposition).

4. Verwendung des Ni-Basislegierungspulvers nach Anspruch 3, wobei der additiv gefertigte Gegenstand eine Defektrate von 1,2 % oder weniger und ein Gesamtreflexionsvermögen von 20 % oder mehr aufweist, gemessen nach dem in der Beschreibung beschriebenen Verfahren.

## Revendications

1. Une poudre d'alliage à base de Ni, comprenant :
en % en masse,
de 3,5 à 4,5% d'Al,
de 0,8 à 4,0% de Cr,
0,0100% ou moins de C,
de 0,001 à 0,050% d'O,
de 0,0001 à 0,0150% de N,
ladite poudre d'alliage à base de Ni comprenant en outre optionnellement :
1,80% ou moins de Si,
ladite poudre d'alliage à base de Ni comprenant en outre optionnellement :
1,5% ou moins de Mn,
ladite poudre d'alliage à base de Ni comprenant en outre optionnellement :
0,050% ou moins de Mg, et
le reste étant du Ni avec des impuretés inévitables.

2. La poudre d'alliage à base de Ni selon la revendication 1, dans laquelle la taille des particules de poudre de l'alliage à base de Ni est comprise dans une gamme allant de 1 à 100µm lorsqu'elle est mesurée selon la méthode décrite dans la description.

3. Utilisation de la poudre d'alliage à base de Ni selon l'une quelconque des revendications 1 à 2 pour fabriquer un article par fabrication additive en utilisant la fusion sur lit de poudre ou le dépôt d'énergie dirigée.

4. L'utilisation de la poudre d'alliage à base de Ni selon la revendication 3, dans laquelle l'article fabriqué par fabrication additive comprend un taux de défauts de 1,2% ou moins et une réflectance totale de 20% ou plus lorsqu'il est mesuré selon la méthode décrite dans la description.
